# EUROPEAN PATENT APPLICATION

(11) **EP 3 831 507 A1**
(43) Date of publication of application: **09.06.2021**
(21) Application number: 19214086.1
(22) Date of filing: 06.12.2019
(51) Int. Cl.: B21H 3/02, B21H 3/06, B21K 1/46, B21K 1/56, B21K 5/02, F16B 25/10

(54) **MANUFACTURING METHOD OF A DRILL**

(71) Applicant: Hilti Aktiengesellschaft, 9494 Schaan (LI)
(72) Inventor: Hasler, Claudio, 9488 Schellenberg (LI); Neuhorst, Peter, 825 Kaohsiung City (TW)
(74) Representative: Hilti Aktiengesellschaft Corporate Intellectual Property

(57) **Abstract**

A method of manufacturing a drill is disclosed, which comprises providing an elongate element (10) defining a longitudinal direction and having, in the longitudinal direction, a front end, an intermediate section (40), and a rear end opposite to the front end, forming by cold forming only, at the front end, a drill tip (520) having a cutting edge (530), and forming by cold forming only, on the intermediate section (40), a channel (410) extending along the longitudinal direction.

## Description

### Technical Field

The present invention relates to a method of manufacturing a drill.

### Background Art

Drills and self-drilling screws are known which are manufactured by applying one or more massive forming method steps such as cutting, milling, heading, rolling, pinch-pointing and the like, to a blank or semi-finished product. Some of these method steps may be subsumed as cold forming processes, others may produce waste material such as chips which comes at higher cost.

Cold forming is a massive forming method and means changing the shape of a blank below the crystallization temperature of its material. As opposed to machining methods, such as cutting or milling, cold forming does not remove any substantial amount of the material, but forces the material to flow in a way so as to obtain a desired shape.

Heading is a cold forming method and means forcing an end of a blank into a die in a longitudinal direction to increase the dimensions of the blank in one or more lateral directions perpendicular to the longitudinal direction, such as a diameter provided the blank has a circular cross section. In this, the shape of the end may turn into a head of the product. The shape may be determined by a shape of the die.

Pinch-pointing is a cold forming method and means pinching an end of a blank between two or more mating dies to turn a shape of the end into a desired shape, such as a drill tip. The shape may be determined by a shape of the dies.

Cold rolling is a cold forming method and means passing a blank through a pair of rolls to reduce a thickness of the blank to a thickness substantially equal to a distance between the rolls, and/or to create a desired shape of a surface of the blank, such as a thread. If the blank has a circular cross section, cold rolling may result in a flattened cross section. Types of cold rolling include planetary rolling, two- or three- or four-die cylindrical rolling, two- or three- or four-die skew rolling, and others.

Flat-die rolling is a cold forming method and means passing a blank through a pair of flat dies to create a desired shape of a surface of the blank, such as a thread. The dies of the pair of flat dies slide on the blank, relative to the blank, in opposite directions. Thereby, the blank is forced to roll between the dies. The shape of the surface of the blank may be determined by a shape of the flat surfaces of the dies which slide on the blank.

Swaging is a cold forming method and means forcing a blank into a die in a longitudinal direction to reduce the dimensions of the product in one or more lateral directions perpendicular to the longitudinal direction, such as a diameter provided the product has a circular cross section.

### Summary of Invention

According to a first aspect of the invention, a method of manufacturing a drill comprises providing an elongate element defining a longitudinal direction and having, in the longitudinal direction, a front end, an intermediate section, and a rear end opposite to the front end, forming by cold forming only, at the front end, a drill tip having a cutting edge, and forming by cold forming only, on the intermediate section, a channel extending along the longitudinal direction. By using only cold forming for the geometry-shaping process steps within the manufacturing method, waste material may be greatly reduced or even avoided.

According to an embodiment, forming the channel comprises cold rolling the intermediate section. According to another embodiment, forming the channel comprises flat-die rolling the intermediate section. According to a preferred embodiment, cold forming the intermediate section to form the channel is executed after forming the drill tip. Removing or smoothing burrs or other undesirable material created during forming the drill tip may be easily accomplished during cold forming without the need for an additional step.

According to another embodiment, the method comprises forming by cold forming only, in the intermediate section, a reduced-diameter section, and forming the channel on the reduced-diameter section. In preferred embodiments, forming the reduced-diameter section comprises at least one of heading, cold rolling, flat-die rolling, swaging and pinch-pointing.

According to another embodiment, after forming the drill tip and the channel, the channel starts at the cutting edge to transport chips away from the cutting edge. According to another embodiment, the channel has a helical shape.

According to another embodiment, forming the drill tip comprises at least one of heading, cold rolling, flat-die rolling, swaging and pinch-pointing the front end.

According to another embodiment, forming the channel comprises forming a land limiting the channel in a circumferential direction, wherein the land joins the cutting edge, particularly with no off-set in the longitudinal direction. In a preferred embodiment, the land has a helical shape extending to the cutting edge and/or a helical shape of the channel extends to the cutting edge. Avoiding an off-set, or sharp kink, between the land, or channel, and the cutting edge reduces blocking chips of a substrate material created by the cutting edge during drilling, and so enhances transport of such chips away from the substrate by the channel.

According to another embodiment, the method comprises forming by cold forming only, at the rear end, a rotational drive. In a preferred embodiment, forming the rotational drive comprises heading, or swaging the rear end. In another preferred embodiment, the rotational drive comprises a screw head.

According to another embodiment, the method comprises forming by cold forming only, on the intermediate section, a thread. In a preferred embodiment, forming the thread comprises cold rolling the intermediate section. In another preferred embodiment, forming the thread comprises flat-die rolling the intermediate section. In another preferred embodiment, cold forming the intermediate section to form the thread is executed after forming the drill tip.

According to another preferred embodiment, after forming the channel and the thread, in the longitudinal direction, the thread is separated from the channel. In an alternative embodiment, the thread immediately adjoins the channel. In another alternative embodiment, the thread overlaps the channel in the longitudinal direction.

According to another embodiment, the elongate element provided is a monolithic one-piece element. In an alternative embodiment, the method further comprises jointing a tip part comprising the front end to a head part comprising the rear end to form the elongate element. In a preferred embodiment, jointing the tip part to the head part comprises welding the tip part to the head part.

### Brief Description of Drawings

The invention will be described in more detail by way of example hereinafter with reference to the drawings. The described embodiments are only possible configurations in which the individual features may however be implemented independently of each other or may be omitted.

In the drawings:
- Fig. 1: is a side view of a blank;
- Fig. 2: is a side view of a blank;
- Fig. 3: is a side view of a blank;
- Fig. 4: is a side view of a blank and a pinch-pointing die;
- Fig. 5: is a side view of a blank;
- Fig. 6: is a side view of two blanks;
- Fig. 7: is a side view of a blank;
- Fig. 8: is a perspective view of a rolling die;
- Fig. 9: is a side view of a blank;
- Fig. 10: is a perspective view of a blank and a pinch-pointing die;
- Fig. 11: is a side view of a blank;
- Fig. 12: is a side view of a self-drilling screw;
- Fig. 13: is a side view of a self-drilling screw; and
- Fig. 14: is a side view of a self-drilling screw.

### Description of Embodiments

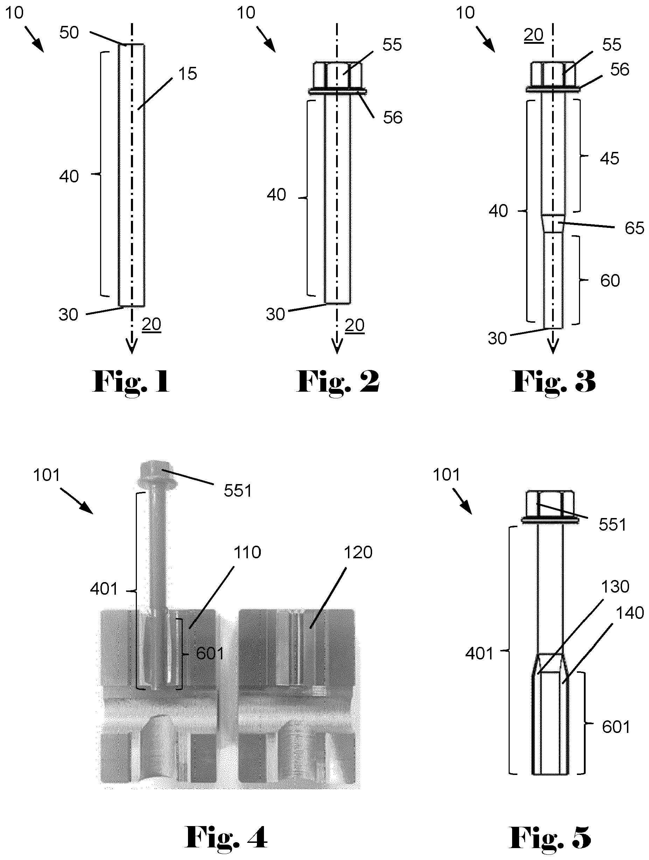

Fig. 1 shows a blank 10 composed of an elongate element 15 which defines a longitudinal direction 20. Along the longitudinal direction 20, the elongate element 10 has a front end 30, an intermediate section 40, and a rear end 50 opposite to the front end 30. The elongate element 10 has the shape of a cylinder, particularly a circular cylinder, and is provided to manufacture a drill, particularly a self-drilling screw, therefrom. The cylinder has a regular cross section, such as a surface of a regular polygon or a circle, the plane of which is oriented perpendicularly to the longitudinal direction 20. In order to fulfill the needs of the later drill, the elongate element 10 is made of a hard material and/or a material that may be hardened, such as a metal or alloy, e.g. steel. The elongate element 10 is a monolithic one-piece element and may be provided e.g. by cutting a wire to a desired length.

Fig. 2 shows the blank 10 after a first step of forming a rotational drive which comprises a screw head 55, at the rear end 50. The screw head 55 is formed as an external hexagon head, but could however be formed as any other external polygon head, such as a square head. The screw head 55 comprises at its outer periphery a flange or integrated washer 56. In non-shown embodiments, the rotational drive comprises an internal polygon drive, an internal or external hexalobular drive, a slotted drive, or a cruciform drive. The rotational drive including the screw head 55 is formed by heading the rear end 50 shown in Fig. 1.

Fig. 3 shows the blank 10 after a further step of forming a reduced-diameter section 60, in the intermediate section 40. A cross-sectional diameter of the reduced-diameter section 60 is preferably reduced by between 10% and 70%. As the cross-sectional diameter of the reduced-diameter section 60 is reduced, its length along the longitudinal direction 20 is increased. A transition section 65 is formed between the reduced-diameter section 60 and a remaining section 45 of the intermediate section 40 with unchanged cross-sectional diameter. In the transition section 65, a cross-sectional diameter of the intermediate section 40 gradually decreases along the longitudinal direction 20 from the unchanged cross-sectional diameter of the remaining section 45 to the reduced cross-sectional diameter of the reduced-diameter section 60. The reduced-diameter section 60 is formed by heading, cold rolling, flat-die rolling, or swaging the intermediate section 40.

Fig. 4 shows a blank 101 and a pair of mating pinch-pointing dies 110, 120. The blank 101 comprises a screw head 551 and an intermediate section 401. The intermediate section 401 comprises a reduced-diameter section 601 which is formed by pinch-pointing the intermediate section 401. In such a pinch-pointing process, a rear end of the intermediate section 401 is pinched between the pinch-pointing dies 110, 120. To this end, the pinch-pointing dies 110, 120 are shaped to determine a shape of the reduced-diameter section 601, such as its cross-sectional diameter and length.

Fig. 5 shows the blank 101 after forming the reduced-diameter section 601 in the intermediate section 401. Flashes 130, 140 have been formed by squeezing some material of the intermediate section 401 in a gap between the pinch-pointing dies 110, 120 (Fig. 4). The flashes 130, 140 may be removed in a separate step or during a following cold-forming step described below, thus avoiding the need for additional work. The flashes 130, 140 are very thin, thus causing little amount of waste material as opposed to known chip-producing methods, such as machining or cutting.

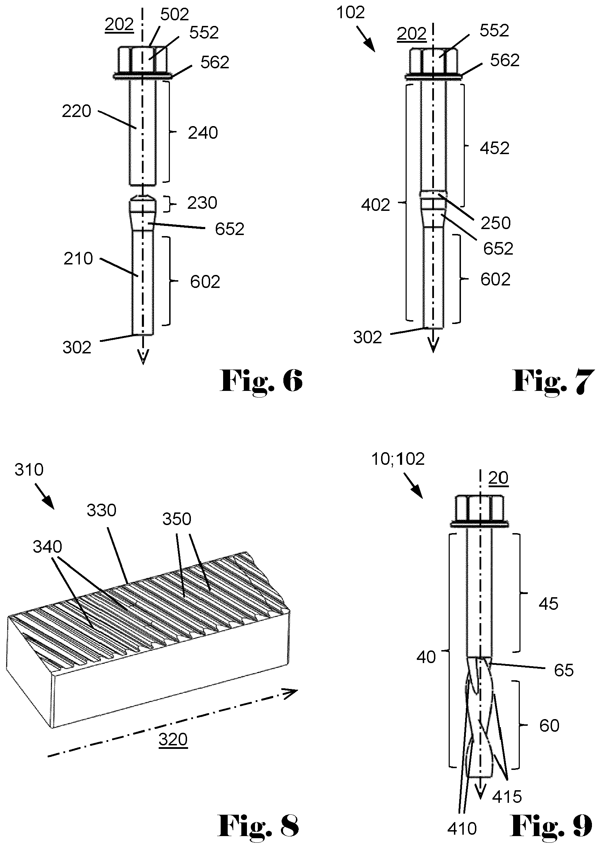

Fig. 6 shows a tip part 210 and a head part 220. Both the tip part 210 and the head part 220 have a longitudinal shape defining a longitudinal direction 202. Along the longitudinal direction 202, the tip part 210 comprises a front end 302, a reduced-diameter section 602, a transition section 652 and a first jointing section 230. The head part 220 comprises a rear end 502 and a second jointing section 240. Both the tip part 210 and the head part 220 may be provided e.g. by cutting a wire to a desired length. The reduced-diameter section 602 and the second jointing section 240 each have the shape of a cylinder, particularly a circular cylinder. Each cylinder has a regular cross section, such as a surface of a regular polygon or a circle, the plane of which is oriented perpendicularly to the longitudinal direction 202. The reduced-diameter section 602 may be formed by heading, cold rolling, flat-die rolling, or swaging the tip part 210. At the rear end 502, a rotational drive which comprises a screw head 552 is formed by heading the rear end 502. The screw head 552 is formed as an external hexagon head and comprises at its outer periphery a flange or integrated washer 562.

Fig. 7 shows a blank 102 formed by jointing, or welding, the tip part 210 to the head part 220 both shown in Fig. 6. Similar to the blank 10 shown in Fig. 3, the blank 102, along the longitudinal direction 202, has the front end 302, an intermediate section 402 comprising the reduced-diameter section 602, the transition section 652 and a remaining section 452, and the screw head 552 with the washer 562. In a preferred embodiment, a cross-sectional diameter of the first jointing section 230 is equal or similar to a cross-sectional diameter of the second jointing section 240, thus providing for a constant cross-sectional diameter of the remaining section 452. In the remaining section 452, a joint 250, or weld seam, is formed. The joint 250 may be flattened and/or smoothed in a separate step or during a following cold-forming step described below, thus avoiding the need for additional work.

Fig. 8 shows a first flat die 310 of generally cuboid shape defining a rolling direction 320. The first flat die 310 comprises a first rolling surface 330 having a series of alternating notches 340 and webs 350. The notches 340 and the webs 350 are parallel to each other and inclined with respect to the rolling direction 320 by an inclination angle of between 45° and 80°, for example 70°. In order to form one or more helical channels into a blank of cylindrical shape, a second flat die (not shown) which is a mirror image of the first flat die 310 is arranged near (in Fig. 8: above) the first flat die 310 such that the second rolling surface opposes the first rolling surface 330. Then a blank is arranged between the first and second rolling surfaces and the second flat die is moved with respect to the first flat die 310 in the rolling direction, such that the blank rotates, or rolls, between the first and second rolling surfaces, and the notches 340 and webs 350 form complimentary webs and notches, i.e. one or more channels, into the cylindrical outer surface of the blank.

Fig. 9 shows the blank 10, or blank 102, after a further step of forming two channels 410 extending along the longitudinal direction 20, on the intermediate section 40, in particular on the reduced-diameter section 60. Between the channels 410 and limiting the channels 410 in a circumferential direction, two lands 415 are formed. The channels 410 and lands 415 extend into the transition section 65 and end before the remaining section 45. In non-shown embodiments, the channels and lands end before the transition section or extend into the remaining section. The channels 410 each have a helical shape and are formed by cold rolling, or flat-die rolling the intermediate section 40, for example using two flat dies of the type shown in Fig. 8. In non-shown embodiments, part or all of the channels has a straight shape oriented parallel to the longitudinal direction or inclined with respect to the longitudinal direction. In further non-shown embodiments three or more channels are formed, or only a single channel is formed on the intermediate section.

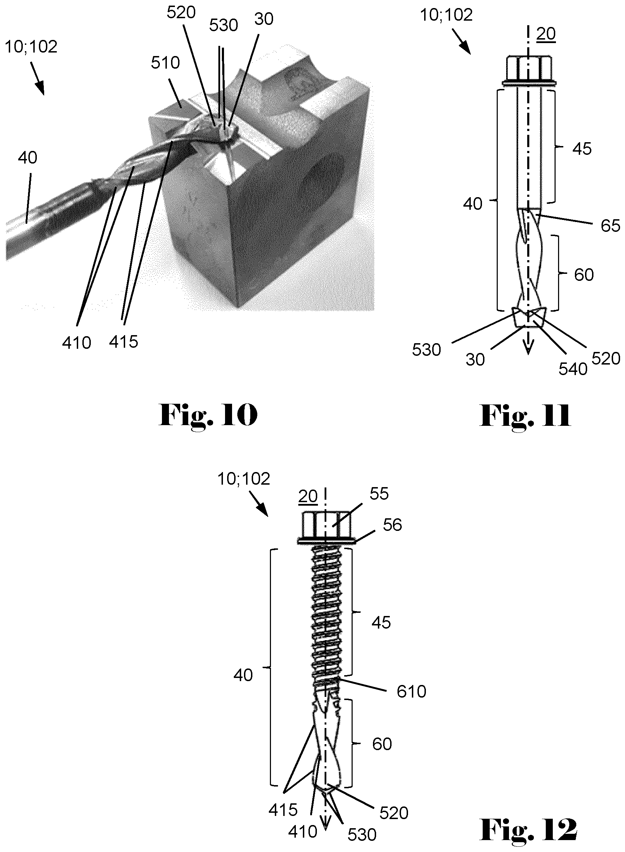

Fig. 10 shows the blank 10, or blank 102, and a pinch-pointing die 510. The intermediate section 40 (shown in part) comprises the channels 410 and the lands 415. At the front end 30, the blank 10 comprises a drill tip 520 which has two cutting edges 530. The drill tip 520 is formed by pinch-pointing the front end 30. In such a pinch-pointing process, the front end 30 is pinched between the pinch-pointing die 510 and a mating further pinch-pointing die (not shown). To this end, the mating pinch-pointing dies are shaped to determine a shape of the drill tip 520, such as its cross-sectional width and the angular orientation of the cutting edges 530. Each of the lands 415 joins one of the cutting edges 530 with no off-set in the longitudinal direction. To this end, the blank 10 is fed into a space between the pinch-pointing dies in an orientation in which an end of each land 415 is in the same circumferential position as a to-be-formed cutting edge 530. In non-shown embodiments, the drill tip is formed by any desired cold forming process, such as heading, cold rolling, flat-die rolling, or swaging the front end.

Fig. 11 shows the blank 10, or blank 102, after forming the drill tip 520 at the front end 30. A flash 540 has been formed by squeezing some material of the front end 30 in a gap between the pinch-pointing dies (Fig. 10). The flash 540 may be removed in a separate step or during a following cold-forming step described below, thus avoiding the need for additional work. The flash 540 is small, thus causing little amount of waste material as opposed to known chip-producing methods, such as machining or cutting. In the embodiment shown, forming the drill tip is executed after forming the channel. In a non-shown embodiment, cold forming the intermediate section to form the channel is executed after forming the drill tip. Removing or smoothing burrs or other undesirable material created during forming the drill tip may then be easily removed during cold rolling without the need for an additional step.

Fig. 12 shows the blank 10, or blank 102, after a further step of forming a thread 610 on the intermediate section 40. The thread 610 is formed by cold rolling, or flat-die rolling the intermediate section 40. Cold forming the intermediate section 40 to form the thread 610 is executed after forming the drill tip 520, thereby easily removing or smoothing any burrs created during forming the drill tip. According to a non-shown embodiment, forming the drill tip is executed after forming the thread. As shown in Fig. 12, the blank 10, or blank 102, has been formed into a self-drilling screw having, along the longitudinal direction, the drill tip 520 with the two cutting edges 530, the reduced-diameter section 60 with the two channels 410 and the two lands 415, the remaining section 45 with the thread 610, and the screw head 55 with the integrated washer 56. The channels 410 and the lands 415 start at the cutting edges 530 to transport chips created during drilling away from the cutting edge. Avoiding an off-set between the lands 415 and the cutting edges 530 reduces blocking of the chips during their transport by the channels 410. In this way, drilling by the self-drilling screw is enhanced. Further, the channels 410 overlap the thread 610. In non-shown embodiments, the thread is separated from the channel in the longitudinal direction or immediately adjoins the channel. In further non-shown embodiments, the screw head is formed as a pan-head.

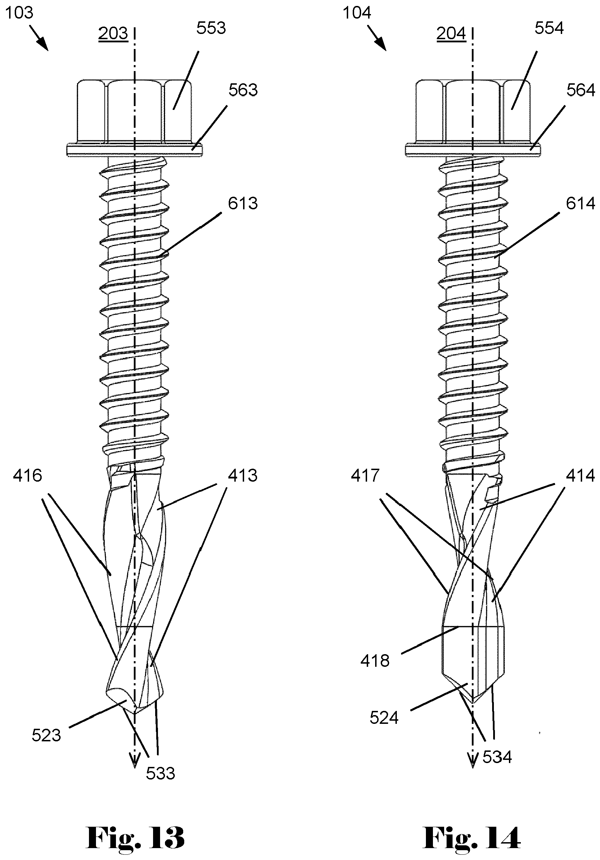

Fig. 13 shows an alternative embodiment of a self-drilling screw 103 manufactured by one of the methods described above or a combination thereof. Along a longitudinal direction 203, the screw 103 comprises a screw head 553 with an integrated washer 563, a thread 613, two channels 413 circumferentially limited by two lands 416, and a drill tip 523 with two cutting edges 533. The channels 413 and the lands 416 start at the cutting edges 533 to transport chips created during drilling away from the cutting edges 533. Avoiding an off-set between the lands 416 and the cutting edges 533 reduces blocking of the chips during their transport by the channels 413. In this way, drilling by the self-drilling screw is enhanced. Furthermore, the channels 413 and the lands 416 each have a helical shape extending to one of the cutting edges 533. Avoiding any sharp kink within the channels 413 further enhances transport of such chips away from a substrate by the channels 413. The thread 613 immediately adjoins the channels 413 and the lands 416 in the longitudinal direction 203.

Fig. 14 shows another alternative embodiment of a self-drilling screw 104 manufactured by one of the methods described above or a combination thereof. Along a longitudinal direction 204, the screw 104 comprises a screw head 554 with an integrated washer 564, a thread 614, two channels 414 circumferentially limited by two lands 417, and a drill tip 524 with two cutting edges 534. The channels 414 and the lands 417 start at the cutting edges 534 to transport chips created during drilling away from the cutting edges 534. Avoiding an off-set between the lands 417 and the cutting edges 534 reduces blocking of the chips during their transport by the channels 414. In this way, drilling by the self-drilling screw is enhanced. In the longitudinal direction 204, the channels 414 overlap the thread 614. Furthermore, the channels 414 and the lands 417 each have a helical shape extending to a rounded kink 418, and a linear shape extending between the kink 418 and one of the cutting edges 534.

As described, by using only cold forming for the geometry-shaping process steps within the manufacturing method, waste material may be greatly reduced or even avoided. While the invention has been described with reference to its preferred embodiments, it will be understood by those skilled in the art that various changes may be made and equivalents may be substituted for elements thereof without departing from the true spirit and scope of the invention. In addition, many modifications may be made to adapt a particular situation or material to the teaching of the invention without departing from its essential teachings.

## Claims

1. A method of manufacturing a drill, comprising
a) providing an elongate element defining a longitudinal direction and having, in the longitudinal direction, a front end, an intermediate section, and a rear end opposite to the front end,
b) forming by cold forming only, at the front end, a drill tip having a cutting edge, and
c) forming by cold forming only, on the intermediate section, a channel extending along the longitudinal direction.

2. The method as claimed in claim 1, wherein forming the channel comprises cold rolling the intermediate section, or flat-die rolling the intermediate section.

3. The method as claimed in any one of the preceding claims, wherein cold forming the intermediate section to form the channel is executed after forming the drill tip.

4. The method as claimed in any one of the preceding claims, comprising forming by cold forming only, in the intermediate section, a reduced-diameter section, and forming the channel on the reduced-diameter section.

5. The method as claimed in claim 4, wherein forming the reduced-diameter section comprises at least one of heading, cold rolling, flat-die rolling, swaging and pinch-pointing.

6. The method as claimed in any one of the preceding claims, wherein the channel has a helical shape.

7. The method as claimed in any one of the preceding claims, wherein forming the drill tip comprises at least one of heading, cold rolling, flat-die rolling, swaging and pinch-pointing the front end.

8. The method as claimed in any one of the preceding claims, wherein forming the channel comprises forming a land limiting the channel in a circumferential direction, and wherein the land joins the cutting edge.

9. The method as claimed in claim 8, wherein the land has a helical shape extending to the cutting edge.

10. The method as claimed in any one of the preceding claims, further comprising
d) forming by cold forming only, at the rear end, a rotational drive.

11. The method as claimed in any one of the preceding claims, further comprising
e) forming by cold forming only, on the intermediate section, a thread.

12. The method as claimed in claim 11, wherein forming the thread comprises cold rolling the intermediate section, or flat-die rolling the intermediate section.

13. The method as claimed in any one of claims 11 and 12, wherein cold forming the intermediate section to form the thread is executed after forming the drill tip.

14. The method as claimed in any one of the preceding claims, wherein the elongate element provided in step a) is a monolithic one-piece element.

15. The method as claimed in any one of claims 1 to 14, further comprising
f) jointing, or welding, a tip part comprising the front end to a head part comprising the rear end to form the elongate element.
